# EUROPÄISCHE PATENTSCHRIFT

(11) **EP 0 480 132 B1**
(45) Veröffentlichungstag und Bekanntmachung des Hinweises auf die Patenterteilung: **26.10.1994**
(21) Anmeldenummer: 91110223.4
(22) Anmeldetag: 21.06.1991
(51) Int. Cl.: H01H 35/40, H01H 35/34, G01F 3/20

(54) **Durchfluss- oder Druckschalter für eine Fluidleitung**
Flow- or pressure switch for fluid conduction
Interrupteur à passage de fluide ou à pression pour une conduite de fluide

(30) Priorität: 15.09.1990 DE 9013153 U
(43) Veröffentlichungstag der Anmeldung: 15.04.1992
(73) Patentinhaber: PIERBURG GMBH, 41460 Neuss (DE)
(72) Erfinder: Buse, Werner, W-4044 Kaarst (DE)

(56) Entgegenhaltungen:
- DE-A- 2 750 419
- DE-A- 2 942 801
- DE-B- 1 590 017
- DE-U- 7 341 369
- US-A- 3 433 910

## Beschreibung

Die Neuerung betrifft einen Durchflußschalter für eine Fluidleitung nach dem Oberbegriff des Schutzanspruchs 1.

Derartige Schalter werden für Brennkraftmaschinen verwendet, beispielsweise als Druckschalter für den Schmierölkreis, der elektrisch den Betriebsdruck anzeigt. Es sind jedoch auch andere Anwendungen möglich, bei denen aus dem angezeigten Betriebsdruck und einer bekannten Durchflußdrossel auf den Durchsatz geschlossen werden kann, wobei für genaue Messungen ein überkritisches Druckverhältnis vorliegen sollte, womit eine Messung geringer Durchsätze nicht möglich ist.

Hiervon ausgehend liegt der Neuerung daher die Aufgabe zugrunde, einen gattungsgemäßen Schalter derart zu gestalten, daß Durchflußmessungen auch für kleinste Durchsatzmengen möglich werden.

Diese Aufgabe ist bei einem angegebenen Durchflußschalter durch die im Kennzeichen des Schutzanspruchs 1 angegebenen Merkmale gelöst worden, wobei in den Unteransprüchen Merkmale vorteilhafter Weiterbildungen des Gegenstandes nach Schutzanspruch 1 angegeben sind.

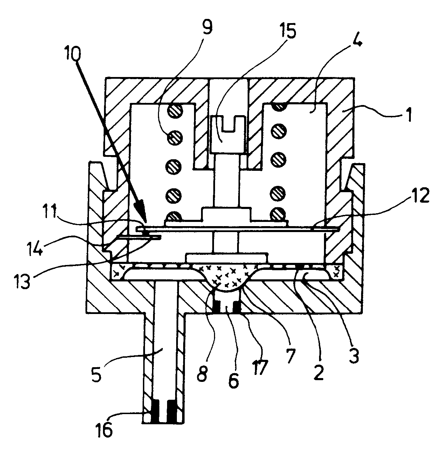

Mit der Neuerung erzielbare Vorteile werden in der nachfolgenden Beschreibung eines Ausführungsbeispiels angegeben, das in der Zeichnung dargestellt ist.

Diese zeigt ein zusammengesetztes Schaltergehäuse 1, das durch eine Membrane 2 in eine Arbeitskammer 3 und eine Schalterkammer 4 aufgeteilt ist. Die Arbeitskammer 3 ist durch eine Zuführleitung 5 mit einer Fluiddruckleitung verbunden und weist eine Abführleitung 6 mit einem Ventilsitz 7 auf, die mit einer Fluidverbraucherleitung verbunden ist.

Die Membrane 2 weist einen Schließkörperansatz 8 auf, der mit dem Ventilsitz 7 zusammenwirkt und durch eine in der Schalterkammer 4 angeordnete Feder 9 auf diesen gedrückt wird.
Ein in der Schalterkammer 4 angeordneter Schalter 10 ist aus einer mit einem Kontakt 11 versehenen Blattfeder 12 und einem Kontakt 13 einer gehäusefesten Kontaktfahne 14 gebildet, wobei die Blattfeder 12 durch einen Membranstößel 15 so betätigt wird, daß bei ausreichend hohem Fluiddruck die Kraft der Feder 9 und der Blattfeder 12 überwunden und die Schaltkontakte 11, 13 geöffnet und bei nicht ausreichend hohem Druck geschlossen sind.

Blattfeder 12 und Kontaktfahne 14 sind gegeneinander elektrisch isoliert und über elektrische Leitungen mit einer nicht dargestellten Auswerteschaltung verbunden.
Die Zuführleitung 5 weist ggf. einen Drosselabschnitt 16 auf, dessen Wirkung später beschrieben wird.

### Funktionsbeschreibung

Der neuerungsgemäße Schalter ist für den Einsatz in eine Fluidleitung mit geringen Durchsatzmengen gedacht, wie sie beispielsweise in einer Anlage zur Zuführung eines Additivs zu einem Brennstofftank vorliegt.

Für eine Begrenzung des Rußausstoßes von Dieselmotoren erfolgt z. B. die Zugabe eines Additivs in den Brennstoff, das katalytische Wirkung hat. Die Beimengung erfolgt im Verhältnis zur Brennstoffmenge, die in den Tank eingefüllt wird, durch eine elektrische Pumpe, wobei diese in Abhängigkeit beispielsweise eines Füllstandgebersignals bzw. Füllstandsänderungssignals bestromt werden kann. Dadurch fördert die Pumpe über die Fluidleitung in die Zuführleitung 5 und bewirkt dort einen Fluiddruck, der gegen die Membrane 2 wirkt. Hierdurch wölbt sich die Membrane 2 unter elastischer Verformung in die Schalterkammer 4 hinein, bis die an der Membrane 2 wirkende Druckkraft ausreicht, die Kräfte der Feder 9 und der Blattfeder 12 zu überwinden, wodurch der Schließkörper 8 vom Ventilsitz 7 abhebt und die Schalterkontakte 11, 13 geöffnet werden. Durch die Öffnung des Ventilsitzes 7 bzw. der Abführleitung 6 entspannt sich der Fluiddruck durch die über die Abführleitung 6 in die zum Tank führende Fluidleitung strömende Fluidmenge, wodurch die Membrane 2 durch die Federkräfte zurückgestellt wird und der Ventilsitz 7 vom Schließkörper 8 geschlossen wird.
Über den Membranstößel 15 erfolgt ebenfalls eine Entlastung der Blattfeder 12, so daß die Kontakte 11, 13 schließen. Dieser Vorgang wiederholt sich während der Pumpenförderung fortlaufend.
Da bei jeder Ventilöffnung gleichzeitig die Kontakte 11, 13 geöffnet werden, kann aus der Anzahl der Schaltzustände - bestromt - unbestromt - die Durchflußmenge bestimmt werden.

Der erfindungsgemäße Durchflußschalter ist für die Messung geringster Durchflußmengen geeignet, da durch Abstimmung der Membranfläche und der Federkräfte jede gewünschte Durchflußcharakteristik erreicht werden kann, z. B. eine geringe Schaltfrequenz mit großen Durchflußmengen oder umgekehrt. Zusätzlich kann die Charakteristik noch durch den Drosselabschnitt 16 der Zuführleitung 5 oder einen Drosselabschnitt 17 in der Abführleitung 6 beeinflußt werden. Im Normalfall sind jedoch große Leitungsquerschnitte vorgesehen, die eine geringe Schmutzempfindlichkeit ergeben und auch eine Förderung hochviskoser Fluide z. B. bei niedrigen Temperaturen zulassen.

Ein großer Vorteil ist durch die Diagnosefähigkeit dieser Anlage gegeben. Wurde bisher für die Prüfung der Funktionsfähigkeit nur die Bestromung der elektrischen Pumpe gewertet, konnte nicht festgestellt werden, ob diese wirklich förderte.

Bei der neuen Anlage liegt nun eindeutig ein Durchflußsignal vor, das z. B. an eine übergeordnete Steuerelektronik ausgegeben und in dieser zu einem Ansteuersignal für die elektrische Pumpe umgewandelt werden kann, so daß eine genaue Beimengung eines Additivs zum Brennstoff erreichbar ist.

Der elektrische Schalter kann z. B. auch von einem berührungslos arbeitenden Näherungsinitiator gebildet sein, der mit Kapazität, Induktivität oder als magnetoresistiver Sensor arbeitet.

## Patentansprüche

1. Durchflußschalter für eine Fluidleitung (5,6), bestehend aus einem elektrischen Schalter und einer mit diesem verbundenen, mit dem Fluiddruck beaufschlagten Membrane (2), in deren Arbeitskammer (3) die Fluidleitung einmündet, dadurch gekennzeichnet, daß die Membrane (2) auf der Arbeitskammerseite (3) einen Schließkörper (8) aufweist oder mit einem solchen verbunden ist, der mit einem Ventilsitz (7) einer Abführleitung (6) der Fluidleitung zusammenwirkt.

2. Schalter nach Anspruch 1, dadurch gekennzeichnet, daß der Schalter (10) aus einer mit einem Kontakt (11) versehenen Blattfeder (12) gebildet ist, die mit einem Membranstößel (15) verbunden ist, wobei der Blattfederkontakt (11) mit einem Kontakt (13) einer gehäusefesten Kontaktfahne (14) zusammenwirkt.

3. Schalter nach Anspruch 1 oder 2, dadurch gekennzeichnet, daß die Membrane (2) durch eine Feder (9) in Schließrichtung des Schließkörpers (8) belastet ist.

4. Schalter nach einem der Ansprüche 1 bis 3, dadurch gekennzeichnet, daß die in die Arbeitskammer (3) einmündende Zuführleitung (5) einen Drosselabschnitt (16) aufweist.

5. Schalter nach einem der Ansprüche 1 bis 4, dadurch gekennzeichnet, daß die Abführleitung 6 einen Drosselabschnitt 17 aufweist.

6. Schalter nach einem der Ansprüche 1, 3, 4 oder 5, dadurch gekennzeichnet, daß der elektrische Schalter (10) von einem berührungslos arbeitenden (z. B. induktiven oder kapazitiven) Näherungsinitiator gebildet ist.

## Claims

1. Flow switch for a fluid line (5, 6), comprising an electric switch and a diaphragm (2), which is connected to said switch and is acted upon by the fluid pressure and into whose working chamber (3) the fluid line opens, characterized in that the diaphragm (2) on the working chamber side (3) has or is connected to a closing body (8), which cooperates with a valve seat (7) of a discharge line (6) of the fluid line.

2. Switch according to claim 1, characterized in that the switch (10) is formed by a leaf spring (12), which is provided with a contact (11) and is connected to a diaphragm plunger (15), the leaf spring contact (11) cooperating with a contact (13) of a housing-fixed contact lug (14).

3. Switch according to claim 1 or 2, characterized in that the diaphragm (2) is loaded by a spring (9) in the closing direction of the closing body (8).

4. Switch according to one of claims 1 to 3, characterized in that the supply line (5) opening into the working chamber (3) has a throttle section (16).

5. Switch according to one of claims 1 to 4, characterized in that the discharge line (6) has a throttle portion (17).

6. Switch according to one of claims 1, 3, 4 or 5, characterized in that the electric switch (10) is formed by a contact-free (e.g. inductive or capacitive) proximity switch.

## Revendications

1. Interrupteur de débit pour une conduite de fluide (5, 6), composé d'un interrupteur électrique et d'une membrane (2), reliée à ce dernier et sollicitée par la pression du fluide, la conduite de fluide débouchant dans le compartiment de travail (3) de cette membrane, caractérisé en ce que la membrane (2) présente, sur le côté compartiment de travail (3), un corps de fermeture (8) ou est reliée à un tel corps, qui concourt avec un siège de soupape (7) d'une conduite d'évacuation (6).

2. Interrupteur suivant la revendication 1, caractérisé en ce que l'interrupteur (10) est formé d'un ressort à lames (12), muni d'un contact (11) et assemblé avec un poussoir de membrane (15), le contact (11) du ressort à lames concourant avec un contact (13) d'une lame porte-contact (14) solidaire du boîtier.

3. Interrupteur suivant l'une des revendications 1 et 2, caractérisé en ce que la membrane (2) est sollicitée par un ressort (9) dans le sens de fermeture du corps (8).

4. Interrupteur suivant l'une quelconque des revendications 1 à 3, caractérisé en ce que la conduite d'arrivée (5), débouchant dans le compartiment de travail (3), présente une section d'étrangLement (16).

5. Interrupteur suivant l'une quelconque des revendications 1 à 4, caractérisé en ce que la conduite d'évacuation (6) présente une section d'étranglement (17).

6. Interrupteur suivant l'une quelconque des revendications 1, 3, 4 et 5, caractérisé en ce que l'interrupteur électrique (10) est formé par un détecteur de proximité (inductif ou capacitif), fonctionnant sans contact.
